Europäisches Patentamt

European Patent Office

Office européen des brevets

(11) Veröffentlichungsnummer : **0 114 969**
**B1**

(12) # EUROPÄISCHE PATENTSCHRIFT

(45) Veröffentlichungstag der Patentschrift :
30.07.86

(21) Anmeldenummer : 83111804.7

(22) Anmeldetag : 25.11.83

(51) Int. Cl.⁴ : **C 02 F 9/00**, C 01 D 1/32,
H 01 M 10/26, B 67 C 1/00

(54) Verfahren zur Verringerung des Aluminiumgehalts von alkalischen Elektrolytlösungen bei Batterien mit Aluminiumanoden.

(30) Priorität : 27.12.82 DE 3248153

(43) Veröffentlichungstag der Anmeldung :
08.08.84 Patentblatt 84/32

(45) Bekanntmachung des Hinweises auf die Patenterteilung : 30.07.86 Patentblatt 86/31

(84) Benannte Vertragsstaaten :
AT BE CH FR GB LI

(56) Entgegenhaltungen :
DE-B- 2 738 134
FR-A- 2 404 600
US-A- 4 287 057
CHEMICAL ABSTRACTS, Band 79, Nr. 6, 13. August 1973, Seite 202, Nr. 34905v, Columbus, Ohio, US
CHEMICAL ABSTRACTS, Band 87, Nr. 10, 5. September 1977, Seite 305, Nr. 72953g, Columbus, Ohio, US

(73) Patentinhaber : Accumulatorenwerke Hoppecke Carl Zoellner & Sohn GmbH & Co. KG
Bontkirchener Strasse 1 Postfach 1140
D-5790 Brilon 2 (DE)

(72) Erfinder : Ruch, Jean, Dr.
Am Niederen Tor 13
D-5790 Brilon (DE)
Erfinder : Katryniok, Detlef, Dr.
Alexanderstrasse 8
D-5790 Brilon (DE)
Erfinder : Pack, Hugo
Willinger Strasse 10
D-5790 Brilon (DE)
Erfinder : Tillmann, Heinz-Günther
Hölter Weg 19
D-4787 Geseke (DE)

(74) Vertreter : Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)

**Beschreibung**

Die Erfindung betrifft ein Verfahren zur Verringerung des Aluminiumgehalts von alkalischen Elektrolytlösungen bei Batterien mit Aluminiumanoden.

Bei einem durch den BAYER-Prozeß bekanntgewordenen verfahren wird zum Zweck der industriellen Gewinnung von reinem Aluminium-oxid das Bauxit durch Erhitzen mit Natronlauge im Autoklaven aufgeschlossen, wobei das im Bauxit enthaltene Aluminiumhydroxid als Aluminat in Lösung geht, das dann entweder durch Einleiten von Kohlendioxid oder durch « Ausrühren » mit bereits dargestelltem Aluminiumhydroxid zerlegt wird. Die Zerlegung beim Ausrühren beruht darauf, daß die durch Erhitzen im Autoklaven erhaltene Aluminatlösung nach dem Abkühlen und Verdünnen metastabil ist. Das zugesetzte Aluminiumhydroxid beschleunigt den Zerfall des Aluminats, indem es für die Abscheidung des aus dem Aluminat gebildeten Aluminiumhydroxids die Kristallisationskeime liefert.

In alkalischen Elektrolytlösungen, wie sie beispielsweise in Batterien mit Aluminumanoden zur Anwendung kommen, finden ähnliche Kristallisationsprozesse statt, bei denen Aluminiumhydroxid entsteht. Es kommt bei den Batterien zwar zu keiner ausreichenden Ausscheidung, doch die Anreicherung des Elektrolyten mit Aluminiumhydroxid führt vielmehr zu unerwünschten Störungen sowohl im elektrochemischen Stoffumsatz als auch im technisch-funktionellen Bereich, da mit steigender Viskosität z. B. Pumpen und Leitungen schneller verstopfen.

Davon ausgehend liegt der Erfindung die Aufgabe zugrunde, bei Batterien mit Aluminiumanoden ein Verfahren aufzuzeigen, mit dem der Aluminiumgehalt in der alkalischen Elektrolytlösung verringert werden kann, wobei die Wirkung selbst noch bei solchen Verhältnissen gewährleitet sein soll, wie sie in Elektrolyten von Al/O$_2$-Zellen vorherrschen.

Zur Lösung dieser Aufgabe wird mit der Erfindung vorgeschlagen, daß die Elektrolytlösung mit einem Fällungsmittel aus einem Hydroxid der Erdalkalimetalle versetzt wird.

Mit diesem Verfahren ist es erstmals möglich, Batterien mit Aluminiumanoden einwandfrei betreiben zu können, ohne daß sich Aluminiumhydroxid im Laufe der Zeit ansammelt. Dadurch wird die Leistungsfähigkeit elektrochemischer Zellen wesentlich verbessert und ihre Nutzzeit verlängert. Gleichzeitig sind auch Einsparungen der dazu erforderlichen Elektrolytmengen zu erzielen, was sich wiederum nicht zuletzt günstig auf die Dimensionierung einer entsprechenden Anlage auswirkt. Bei der Zugabe des Fällungsmittels kommt es zur Ausfällung eines Aluminats der Erdalkalimetalle, das unlöslich ist. Die Wirkung tritt bereits nach relativ kurzer Zeit ein und läßt sich auch noch bei minimalsten Al/OH-Verhältnissen nachweisen. Die Aluminat- bzw. Hydroxidkonzentration der Lösung erreicht nach einer gewissen Zeit einen im wesentlichen konstanten Wert.

Aus « Chemical Abstracts, Band 79, Nr. 6, 1973, Seite 202, Nr. 34905v » ist es zwar bekannt, Aluminiumionen aus einer verbrauchten Lösung dadurch zu entfernen, daß Erdalkalimetallhydroxide zugeführt werden, so daß sich filterbare Aluminate bilden, doch ist eine Verwendung für Batterien mit Aluminiumanoden nicht offenbart und auch nicht nahegelegt.

Aus « Chemical Abstracts, Band 87, Nr. 10, 1977, Seite 305, Nr. 72953g » ist es bekannt, aus Natriumhydroxidlösungen, die Aluminium enthalten, das Aluminium dadurch zu entfernen, daß Kalk in Form von CaO hinzugegeben wird.

Bei bevorzugter Zugabe des Fällungsmittels als Feststoff kommt es zu einer Festkörperreaktion, die in quantitativer Hinsicht genau vorherbestimmbar ist.

Vorzugsweise kann die Zugabe des Fällungsmittels unter erhöhten Temperaturen erfolgen, und vorzugsweise kann das Fällungsmittel aus Calciumhydroxid bestehen.

Die Erfindung wird nachfolgend anhand der Zeichnungen beispielshalber näher erläutert. Es zeigen :

Figur 1 eine Vorrichtung zur Durchführung des erfindungsgemäßen Verfahrens in einer schematisierten Schnittdarstellung und

Figur 2 eine schematische Gesamtansicht einer elektrochemischen Zellenanlage mit einer integrierten Vorrichtung nach Fig. 1.

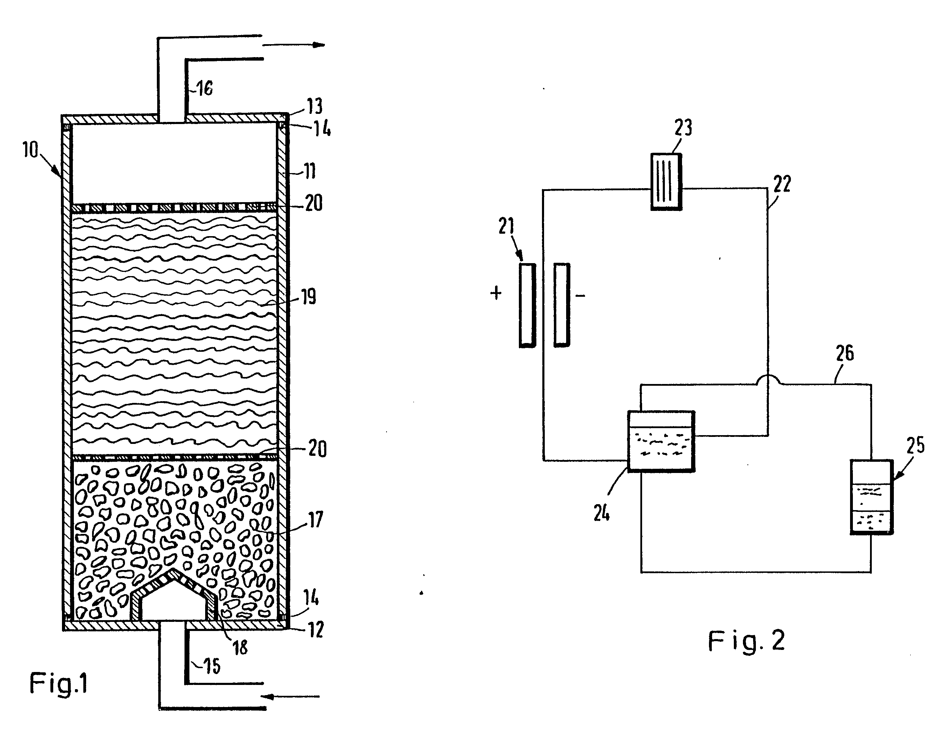

Gemäß Fig. 1 besteht die Vorrichtung aus einem Reaktor 10, dessen Gehäuse 11 als Kartusche ausgebildet ist. Der zylinderförmige Innenraum ist endseitig durch einen unteren Deckel 12 und einen oberen Deckel 13 verschlossen, die über Dichtungen 14 mit der Gehäusewandung verbunden sind. Im unteren Deckel ist ein Einlaßstutzen 15 und im oberen Deckel 13 ein Auslaßstutzen 16 für die Zu- und Abführung der alkalischen Lösung vorgesehen. Im unteren Teil des Gehäuseinnenraums befindet sich ein Fällungsmittel 17 in Form eines Feststoffes aus zerkleinertem Marmorkalkhydrat, der durch einen Flüssigkeitsverteiler 18 von der Einlaßöffnung getrennt ist. Oberhalb des Fällungsmittels 17 ist in dem Gehäuse 11 ein Filtereinsatz 19 untergebracht, der durch Halterungen 20 gehalten wird. Als ein geeignetes Filtermaterial wird Glaswolle bevorzugt.

Fig. 2 zeigt eine Anlage zur Gewinnung elektrischer Energie bestehend aus einer elektrochemischen Zelle 21, einem geschlossenen Leitungssystem 22 für die Elektrolytlösung, einem Kühler 23 und einem Tank 24. Ferner ist ein Reaktor 25 vorgesehen, der im Aufbau im wesentlichen der Vorrichtung nach Fig. 1 entspricht und der über ein parallel geschaltetes Leitungssystem 26 an den Tank 24 angeschlossen ist. Selbstverständlich kann der Reaktor 25 auch in Reihe zwischen Kühler 23 und Tank 24 geschaltet sein (nicht dargestellt). Die elektrochemische Zelle 21 besteht aus einer Batterie mit einer Aluminiumanode. Als Elektrolytlösung wird eine Kalilauge bevorzugt.

Die Wirkungsweise der Erfindung wird durch die nachstehende Versuchsdurchführung verdeutlicht. Für eine Al/O$_2$-Zelle wird eine 6,5 Mol KOH-Lösung bei 80 °C mit Al(OH)$_3$ angereichert, bis eine Konzentration von ca. 3 Mol/l erreicht ist. Nach Abkühlung der Elektrolytlösung auf ca. 60 °C werden 2 Mol (148,2 g) Ca(OH)$_2$ beigegeben und anschließend in bestimmten Zeitabständen die sich aus der nachfolgenden Tabelle ergebenden Werte ermittelt :

| Probe | t(h) | U(mV) | ppm | C(M/l) |
|---|---|---|---|---|
| 1 | 0,0 | - 59,68 | 142,5 | 2,64 |
| 2 | 0,1 | - 67,68 | 133,5 | 2,47 |
| 3 | 0,5 | - 69,55 | 127,5 | 2,36 |
| 4 | 1,0 | - 70,23 | 126,5 | 2,34 |
| 5 | 2,0 | - 70,00 | 125,5 | 2,32 |
| 6 | 4,0 | - 70,90 | 125,5 | 2,32 |
| 7 | 5,0 | - 70,60 | 125,0 | 2,31 |
| 8 | 96,0 | - 70,60 | 125,0 | 2,31 |

Nach Ablauf von 96 h trat keine weitere Konzentrationsänderung mehr ein.

**Patentansprüche**

1. Verfahren zur Verringerung des Aluminiumgehalts von alkalischen Elektrolytlösungen bei Batterien mit Aluminiumanoden, dadurch gekennzeichnet, daß die Elektrolytlösung mit einem Fällungsmittel aus einem Hydroxid der Erdalkalimetalle versetzt wird.

2. Verfahren nach Anspruch 1, dadurch gekennzeichnet, daß das Fällungsmittel in fester Form zugegeben wird.

3. Verfahren nach Anspruch 1 oder 2, dadurch gekennzeichnet, daß die Zugabe des Fällungsmittels unter erhöhten Temperaturen erfolgt.

4. Verfahren nach einem der Ansprüche 1 bis 3, dadurch gekennzeichnet, daß das Fällungsmittel aus Calciumhydroxid besteht.

**Claims**

1. Method of reducing the aluminium content of alkaline electrolyte solutions in batteries with aluminium anodes, characterised in that the electrolyte solution is reacted with a precipitation medium in a hydroxide of the alkaline earth metals.

2. Method according to claim 1, characterised in that the precipitation medium is added in solid form.

3. Method according to claim 1 or 2, characterised in that the addition of the precipitation medium is effected at high temperatures.

4. Method according to one of claims 1 to 3, characterised in that the precipitation medium is calcium hydroxide.

**Revendications**

1. Procédé pour la diminution de la teneur en aluminium de solutions d'électrolytes alcalines dans des batteries à anodes en aluminium, caractérisé en ce que la solution d'électrolyte est mélangée avec un agent de précipitation constitué d'un hydroxyde des métaux alcalino-terreux.

2. Procédé selon la revendication 1, caractérisé en ce que l'agent de précipitation est ajouté sous forme solide.

3. Procédé selon la revendication 1 ou la revendication 2, caractérisé en ce que l'addition de l'agent de précipitation a lieu à des températures élevées.

4. Procédé selon l'une des revendications 1 à 3, caractérisé en ce que l'agent de précipitation est constitué d'hydroxyde de calcium.

Fig.1

Fig. 2

0 114 969